# EUROPEAN PATENT APPLICATION

(11) **EP 4 750 066 A1**
(43) Date of publication of application: **27.05.2026**
(21) Application number: 23949202.8
(22) Date of filing: 16.08.2023
(51) Int. Cl.: H04N 21/431, H04N 21/45, H04N 21/442, H04N 21/472, H04N 21/2187, H04N 21/475, H04N 21/81

(54) **DISPLAY DEVICE AND OPERATION METHOD THEREOF**

(71) Applicant: LG Electronics Inc., Yeongdeungpo-gu Seoul 07336 (KR)
(72) Inventor: LEE, Seo Jin, Seoul 06772 (KR); CHOI, Kwang Soo, Seoul 06772 (KR); KIM, Jae Uk, Seoul 06772 (KR)
(74) Representative: Schott, Jakob Valentin
(86) International application number: PCT/KR2023/012093
(87) International publication number: WO 2025/037655

(57) **Abstract**

A display device according to an embodiment of the present invention may comprise: a display; a memory for storing content information about content most recently played back by a user account, the content information including information about an application most recently executed by the user account and/or a captured image or a thumbnail image of the content, provided through the application; and a controller for displaying, on the display, a picture in picture (PIP) item including the content information if login is performed through the user account, receiving a command for focusing the PIP item, and playing back the content on the PIP item or on the entire screen of the display according to the received command.

## Description

### [Technical Field]

The present disclosure relates to a display device.

### [Background Art]

Digital TV services using wired or wireless communication networks are becoming commonplace. Digital TV services can provide various services that could not be provided by conventional analog broadcast services.

For example, IPTV (Internet Protocol Television) and smart TV services, which are types of digital TV services, provide interactivity that allows a user to actively select types of viewing programs, viewing times, and the like. Based on such interactivity, IPTV and smart TV services may provide various additional services, such as Internet searching, home shopping, and online games.

A conventional TV provides, on a home screen, information about an application recently used by a user account and information about a channel recently viewed by the user account.

However, in the prior art, while it is possible to identify only information about an application or a channel recently viewed through a user account, there has been a problem in that it is difficult to quickly access or play back content that was recently played back.

### [Disclosure]

### [Technical Problem]

According to an embodiment of the present disclosure, an object is to provide different user experiences depending on whether content last viewed by a user is real-time broadcast content or content provided through a VOD application.

An object of the present disclosure is to store the most recent playback information (or input information) for each user account, allowing the user to check in advance information about the content they last viewed and enter it.

An object of the present disclosure is to increase convenience by providing visual last input information on a recent input card on a home screen, thereby providing information about entering external inputs, proprietary services, and content provider apps to the user in advance.

### [Technical Solution]

A display device according to an embodiment of the present disclosure may comprise a display, a memory configured to store content information about content most recently played back by a user account, the content information comprises at least one of information about an application most recently executed by the user account, and a captured image or a thumbnail image of the content provided through the application, and a controller configured to display a picture in picture (PIP) item including the content information on the display if login is performed through the user account, receive a command for focusing the PIP item, and play back the content on the PIP item or on an entire screen of the display according to the received command.

A method for operating a display device according to an embodiment of the present disclosure may comprise storing content information about content most recently played back by a user account, the content information comprises at least one of information about an application most recently executed by the user account, and a captured image or a thumbnail image of the content provided through the application, displaying a PIP item including the content information on a display if login is performed through the user account, receiving a command for focusing the PIP item, and playing back the content on the PIP item or on an entire screen of the display according to the received command.

### [Advantageous Effects]

According to an embodiment of the present disclosure, even if the content last viewed by the user is real-time broadcast content, the user can continue viewing the corresponding broadcast content through a VOD application.

According to an embodiment of the present disclosure, the most recent playback information (or input information) for each user account is stored, allowing the user to check information about the content they last viewed in advance.

In addition, as not only textual information but also visual information (a thumbnail image or a captured image) is provided in the content information last viewed by the user, the user can easily and efficiently recognize the information about the content last viewed.

### [Description of Drawings]

FIG. 1 is a block diagram illustrating a configuration of a display device according to an embodiment of the present disclosure.
FIG. 2 is a block diagram of a remote control device according to an embodiment of the present disclosure.
FIG. 3 shows an actual configuration example of a remote control device according to an embodiment of the present disclosure.
FIG. 4 shows an example of utilizing a remote control device according to an embodiment of the present disclosure.
FIG. 5 is a flowchart for explaining a method for operating a display device according to an embodiment of the present disclosure.
FIGS. 6 and 7 are views for explaining an example of storing content information about content played back through a user account and providing the stored content information.
FIGS. 8 and 9 are views for explaining scenarios that may occur according to a command for selecting a PIP item included in a home screen according to an embodiment of the present disclosure.
FIG. 10 is a view for explaining various types of PIP items according to an embodiment of the present disclosure.
FIG. 11 is a view for explaining that content information displayed on a PIP item changes when a first user account is switched to a second user account according to an embodiment of the present disclosure.

### [Best Mode]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

A display device according to an embodiment of the present disclosure is, for example, an intelligent display device in which a computer support function is added to a broadcast reception function, and may have an easy-to-use interface such as a handwritten input device, a touch screen, a spatial remote control, or the like since an Internet function is added while fulfilling the broadcast receiving function. In addition, it is connected to the Internet and a computer with the support of a wired or wireless Internet function, so that functions such as e-mail, web browsing, banking, or games can also be performed. A standardized general-purpose OS may be used for these various functions.

Accordingly, in the display device described in the present disclosure, various user-friendly functions can be performed because various applications can be freely added or deleted, for example, on a general-purpose OS kernel. More specifically, the display device may be, for example, a network TV, HBBTV, smart TV, LED TV, OLED TV, and the like, and may be applied to a smart phone in some cases.

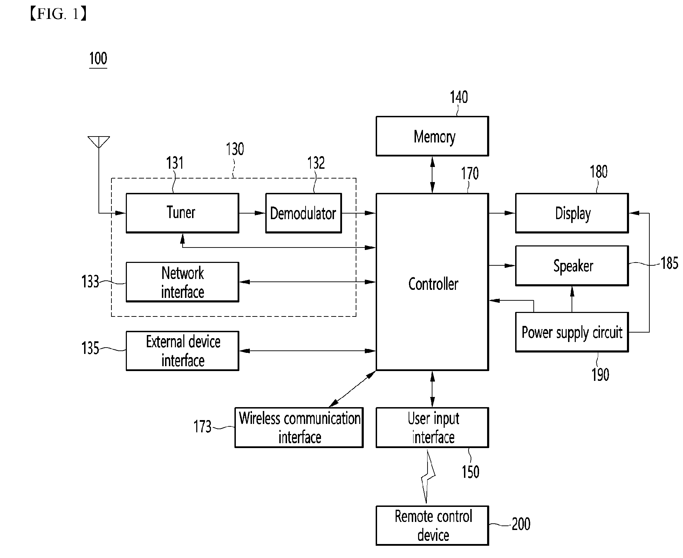

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a contents provider or a network operator. That is, the network interface 133 may receive content such as movies, advertisements, games, VOD, and broadcast signals and information related thereto provided from a contents provider or a network provider through a network.

In addition, the network interface 133 may receive update information and update files of firmware provided by the network operator, and may transmit data to an Internet or contents provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

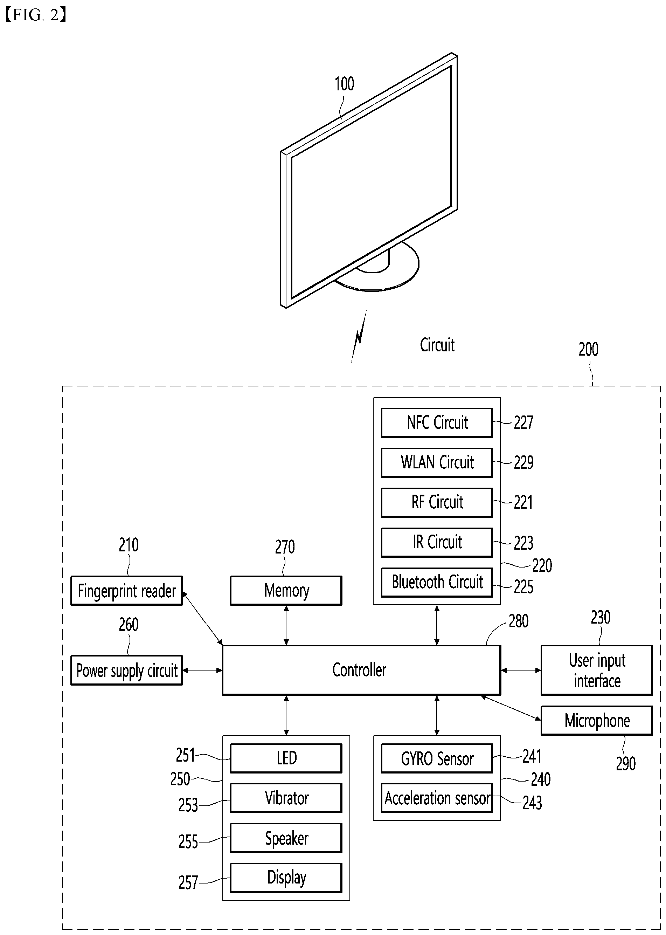

Next, a remote control device according to an embodiment of the present disclosure will be described with reference to FIGS. 2 to 3.

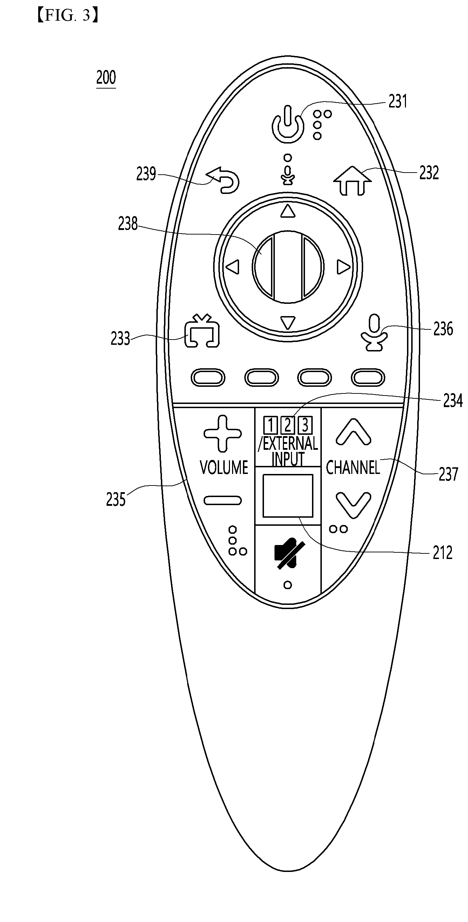

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication interface 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 235 or a signal corresponding to the movement of the remote control device 200 sensed by the sensor 240 through the wireless communication interface 225.

Also, the microphone 290 of the remote control device 200 may obtain a speech.

A plurality of microphones 290 may be provided.

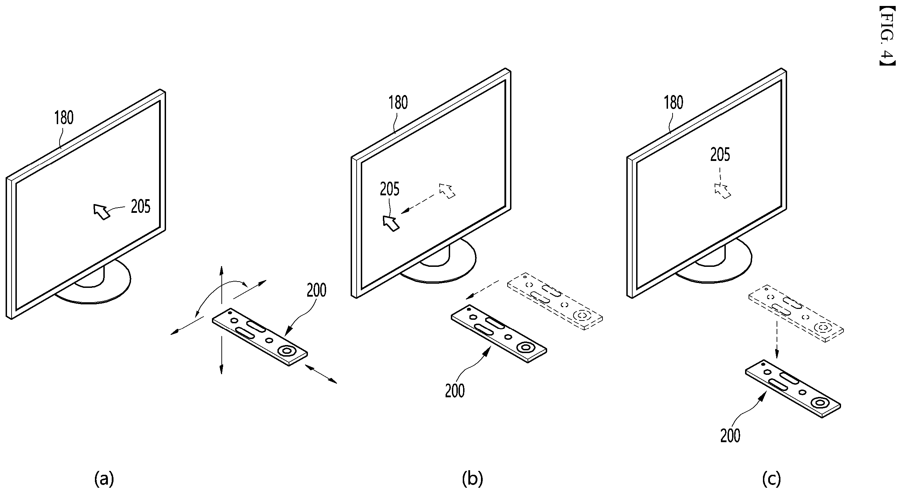

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

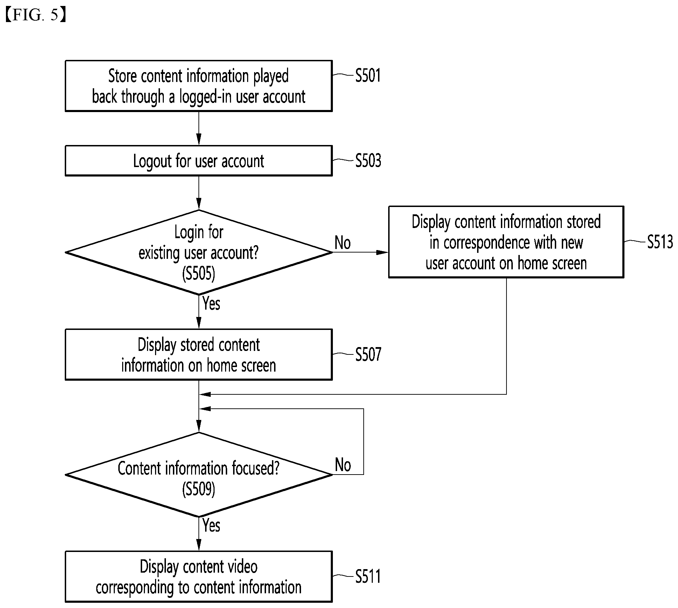

FIG. 5 is a flowchart for explaining a method for operating a display device according to an embodiment of the present disclosure.

Referring to FIG. 5, the controller 170 may store, in the memory 140, content information about content played back through a logged-in user account (S501).

In one embodiment, the content information stored in the memory 140 may include recent input information about content last viewed by a user corresponding to the user account.

The recent input information may include information about content being played back on a screen of the display 180 immediately before the display device 100 is powered off or immediately before logout.

The content information may include at least one of information about an application or content most recently played back by the user account.

The content information may include information about content played back through a specific application.

For example, when broadcast content is played back through a live TV application that provides a live broadcast, the content information may include at least one of a thumbnail image of the broadcast content being played back, a captured image of the broadcast content, a playback point of the captured image within an entire playback period of the broadcast content 600, a name of the broadcast content, channel information (a channel name or a channel number) that provided the broadcast content, or episode information of the broadcast content.

As another example, when VOD content is played back through a Video On Demand (VOD) application, the content information may include at least one of a thumbnail image of the VOD content being played back, a captured image of the VOD content, a name of the VOD content, or episode information of the VOD content.

The content information may include usage information of an external device connected to the display device 100. The external device connected to the display device 100 may be a device connected through the external device interface 135 or the wireless communication interface 173 of the display device 100.

The external device may be an electronic device such as a personal computer (PC), a game machine, a smartphone, or a laptop.

The usage information of the external device may include at least one of a name of the connected external device, a last captured image of a video based on a video signal received from the external device, or an external device image representing the external device.

The controller 170 may capture a screen being played back through the display 180 at every predetermined time interval while a specific user account is logged in. The controller 170 may store the captured image as content information in the memory 140.

The controller 170 may perform logout for a user account according to a logout command (S503).

The controller 170 may match the content information with a first user account and store it in the memory 140. After storing the content information in the memory 140, the controller 170 may perform logout for the first user account according to the logout command.

In another embodiment, the controller 170 may match the content information with the first user account and store it in the memory 140 before the display device 100 is powered off.

When a login request is received, the controller 170 may determine whether login for an existing user account is being performed (S505).

The controller 170 may determine whether the login for the existing user account is being performed by comparing a user ID and a password included in the login request with pre-stored user IDs and passwords.

If the received login request is a request for an existing user account, the controller 170 may display the content information stored in the memory 140 on a home screen of the display 180 (S507).

The controller 170 may expose the content information matched with the existing user account on the home screen in a Picture In Picture (PIP) form.

That is, the controller 170 may display a PIP item representing last input information of the corresponding user account on the home screen. At least one of a thumbnail image of the content, a captured image of the content, and source information representing a source of the content may be displayed on the PIP item.

If a captured image corresponding to the user account does not exist, a thumbnail image or an app icon may be displayed on the PIP item.

The source information may include at least one of an icon of an application representing a source that provided the content or a source name representing the source of the content.

In another embodiment, when the display device 100 is powered on and the existing user account is in a logged-in state, the controller 170 may display content information matched with the logged-in user account on the home screen.

The controller 170 may determine whether the displayed content information is focused (S509), and if the content information is focused, the controller 170 may display a content video corresponding to the content information on the display 180 (S511).

The content information may be focused by a highlight box or the cursor 205 of FIG. 4 that moves according to movement of the remote control device 200.

When the content information is focused, the controller 170 may play back the content video corresponding to the content information on the PIP item.

In another embodiment, when the content information is focused, the controller 170 may play back the content video corresponding to the content information on an entire screen of the display 180.

In another embodiment, the controller 170 may play back the content video on the entire screen of the display 180 in response to receiving a command for selecting the content information.

If the content video is a video provided through a VOD application, the controller 170 may execute the VOD application as the PIP item is focused and resume playing back the content video.

Meanwhile, if it is determined that the received login request is not a request for the existing user account, the controller 170 may display content information stored in correspondence with a new user account on the home screen of the display 180 (S513).

When an account is switched from the first user account to a second user account, the controller 170 may display content information matched with the second user account on the home screen.

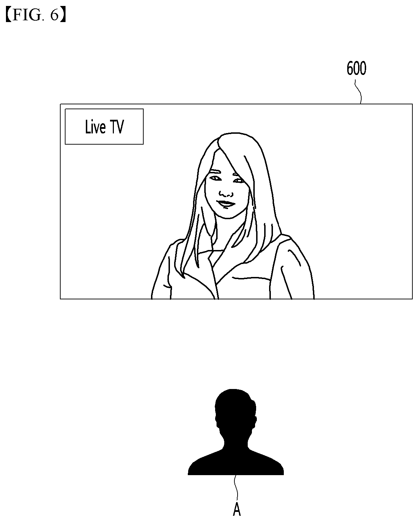

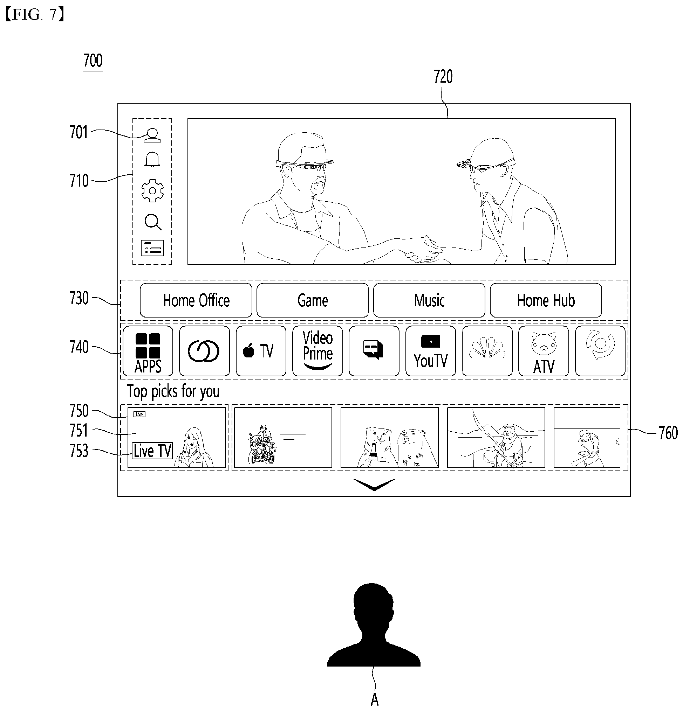

FIGS. 6 and 7 are views for explaining an example of storing content information about content played back through a user account and providing the stored content information.

Referring to FIG. 6, a user A is watching broadcast content 600 being played back on the display 180 through a live TV application.

The broadcast content 600 may be being played back through the entire screen or a partial screen of the display 180.

When the user account for the user A is logged out or the power of the display device 100 is turned off, the controller 170 may store information about the broadcast content 600 in the memory 140.

That is, the controller 170 may match information about content last played back through the account of user A with the user account and store it in the memory 140.

The information about the broadcast content 600 may include at least one of a thumbnail image of the broadcast content 600, a captured image of the broadcast content 600, and a name of the application that provided the broadcast content 600.

FIG. 7 illustrates a home screen 700.

The home screen 700 may include a menu list 710, an advertisement area 720, a service card list 730, an application list 740, a PIP item 750, and a recommended content list 760.

The types and layout of information displayed on the home screen 700 shown in FIG. 7 are merely examples, and may vary according to a user's setting or a setting of a manufacturer of the display device 100.

The menu list 710 may include user account information 701 identifying a user account, and menus for notification, settings, and search.

The advertisement area 720 may be an area for playing back an advertisement video.

The service card list 730 may include a plurality of service cards through which only desired content can be viewed easily and quickly.

The plurality of service cards may include a home office card, a game card, a music card, a home hub card, and a sports card.

The application list 740 may include a plurality of app icons respectively corresponding to a plurality of applications installed in the display device 100.

The PIP item 750 may be an item for providing content information about content most recently viewed through a logged-in user account in a PIP form.

The recommended content list 760 may include content recommended based on a viewing history of the user account.

When a user account corresponding to user A is logged in, the controller 170 may display the PIP item 750 including the content information on the home screen 700.

If the user A logs in again after last viewing the broadcast content 600 of FIG. 6, the display device 100 may display the content information on the PIP item 750.

The content information may include at least one of a thumbnail image 751 of the broadcast content 600, a name of an application that provided the broadcast content 600 (753, Live TV), a title of the broadcast content 600, and channel information (a channel name or a channel number) of the broadcast content 600.

The content information may further include an app icon representing the application.

An image included on the PIP item 750 may be a captured image of the broadcast content 600 instead of the thumbnail image 751. The captured image of the broadcast content 600 may be a scene last viewed by the user A for the broadcast content 600.

As such, according to an embodiment of the present disclosure, the most recent playback information (or input information) for each user account is stored, so that the content information last viewed by the user can be checked in advance.

In addition, as not only textual information but also visual information (a thumbnail image or a captured image) is provided in the content information last viewed by the user, the user can easily and efficiently recognize the information about the content last viewed.

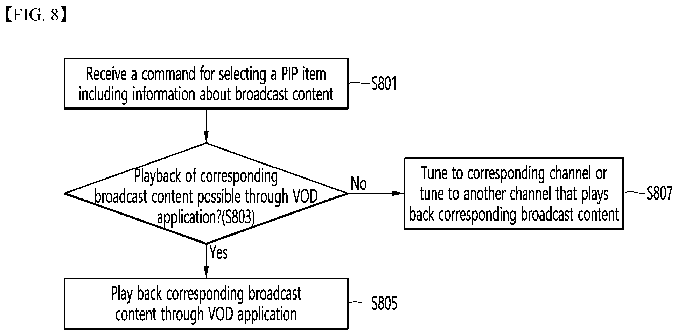

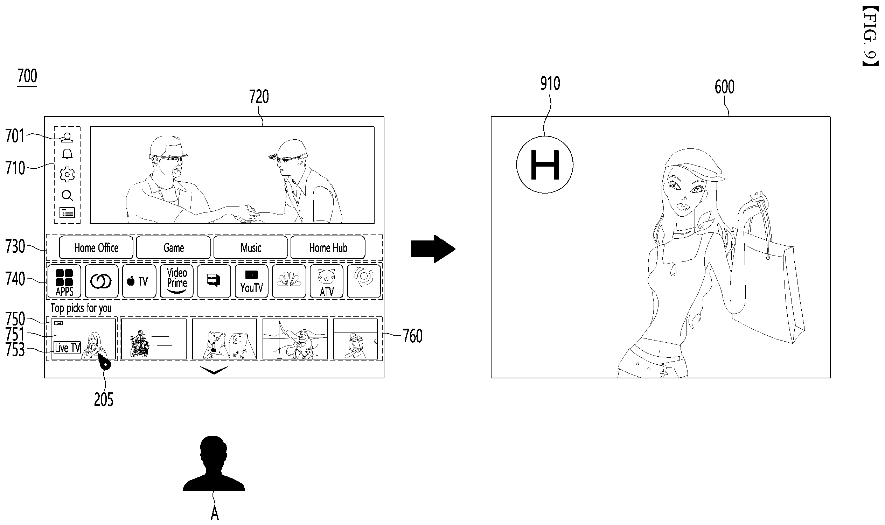

FIGS. 8 and 9 are views for explaining scenarios that may occur according to a command for selecting a PIP item included in a home screen according to an embodiment of the present disclosure.

In FIGS. 8 and 9, a situation is assumed in which the broadcast content 600 is viewed through the account of user A, the display device 100 is powered off, and then the home screen 700 is displayed through the account of user A again.

The controller 170 receives a command for selecting a PIP item including information about the broadcast content 600 (S801).

As shown in FIG. 9, the controller 170 may receive a command for selecting the PIP item 750 through the cursor 205 controlled by the remote control device 200.

The controller 170 may determine whether the corresponding broadcast content can be played back through a VOD application according to the received command (S803).

Since the broadcast content 600 was content broadcast in real-time, it may not be broadcast in real-time after time has passed.

Accordingly, the controller 170 may determine whether the broadcast content 600 can be played back through the VOD application by using the content information about the broadcast content 600 stored in the memory 140.

The content information may include at least one of a name of the broadcast content 600, episode information, and a playback point of a captured image.

The controller 170 may transmit the content information to a server of a content provider that provides the VOD application through the network interface 133.

The server of the content provider may determine whether the broadcast content 600 is a service target by using the received content information, and if it is a service target, may transmit a playback command for the broadcast content 600 to the display device 100.

When the playback command is received from the server of the content provider, the controller 170 may determine that the corresponding broadcast content 600 can be played back through the VOD application.

In another embodiment, the controller 170 may receive in advance information about a plurality of contents that can be provided to the VOD application, and if the received information includes content information about the broadcast content 600, may determine that the corresponding broadcast content 600 can be played back through the VOD application.

The controller 170 may search for an application capable of providing the broadcast content and play back the broadcast content provided through the searched application.

Meanwhile, the controller 170 may identify, on the application list 740, one or more app icons corresponding to one or more VOD applications capable of providing the broadcast content 600.

For example, the controller 170 may highlight one or more app icons corresponding to one or more VOD applications capable of providing the broadcast content 600.

Accordingly, the user may select an application that fits their preference among a plurality of VOD applications capable of viewing the broadcast content 600.

If it is determined that the corresponding broadcast content 600 can be played back through the VOD application, the controller 170 may execute the VOD application to play back the corresponding broadcast content 600 (S805).

The controller 170 may execute the VOD application according to the playback command received from the server of the content provider, and may play back the broadcast content 600 according to the execution of the VOD application.

Meanwhile, the controller 170 may play back the broadcast content 600 from a playback point of a captured image according to the execution of the VOD application.

That is, the controller 170 may resume playing back the broadcast content from a playback point that the user previously last viewed.

If an application capable of providing the broadcast content is not searched, the controller 170 may tune to a channel that provided the broadcast content or tune to another channel that plays back the broadcast content.

Referring to FIG. 9, the controller 170 may play back the broadcast content 600 on the display 180 through a VOD application in response to receiving a command for selecting the PIP item 750.

The controller 170 may further display an app icon 910 identifying the VOD application on the broadcast content 600.

As such, according to an embodiment of the present disclosure, even if the content last viewed by the user is real-time broadcast content, the user can continue viewing the corresponding broadcast content through a VOD application.

Meanwhile, if it is determined that the corresponding broadcast content cannot be played back through the VOD application, the controller 170 may tune to a channel that provided the broadcast content or tune to another channel that plays back the broadcast content (S807).

When a playback impossibility command is received from a server of a content provider, the controller 170 may determine that the corresponding broadcast content cannot be played back through the VOD application.

In one embodiment, if it is determined that the corresponding broadcast content cannot be played back through the VOD application, the controller 170 may tune the tuner 131 to a channel number that provided the corresponding broadcast content.

In another embodiment, the controller 170 may search for another channel providing the corresponding broadcast content based on stored Electronic Program Guide (EPG) information.

If another channel providing the corresponding broadcast content is searched, the controller 170 may tune the tuner 131 to the searched other channel.

As such, according to an embodiment of the present disclosure, even when the broadcast content cannot be provided through the VOD application, the corresponding broadcast content can be provided by searching for another channel.

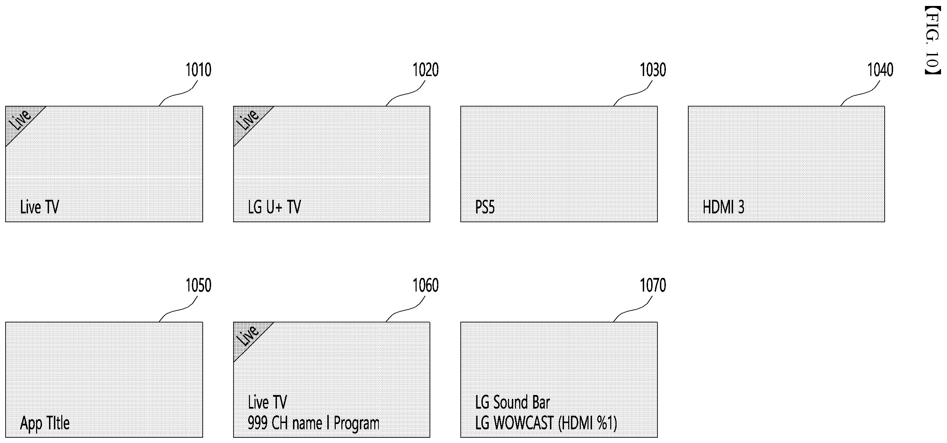

FIG. 10 is a view for explaining various types of PIP items according to an embodiment of the present disclosure.

Each of a plurality of PIP items 1010 to 1070 shown in FIG. 10 may be displayed on a home screen.

A first PIP item 1010 may be an item including content information about real-time broadcast content when a user has viewed the real-time broadcast content through a live TV application.

The first PIP item 1010 may include at least one of a name of the live TV application, and a thumbnail image or a captured image of the broadcast content. The first PIP item 1010 may further include a live tag indicating that it is a live broadcast.

A second PIP item 1020 may be an item including content information about real-time broadcast content when a user has viewed the real-time broadcast content through a set-top box (external input) connected to the display device 100.

The second PIP item 1020 may include at least one of a name of a set-top box application, and a thumbnail image or a captured image of the real-time broadcast content. The second PIP item 1020 may further include a live tag indicating that it is a live broadcast.

A third PIP item 1030 may be an item including content information about a game video when a user has connected a game machine through an HDMI port and played back the game video.

The third PIP item 1030 may include at least one of a name of the game machine connected through the HDMI port, and a thumbnail image or a captured image of the game video. In the third PIP item 1030, a name of the game machine modified by a user input may be displayed instead of a name of the HDMI port.

A fourth PIP item 1040 may be an item including content information about external device content when a user has viewed the external device content received from an external device connected through an HDMI port.

The fourth PIP item 1040 may include at least one of a name of the HDMI port, and a thumbnail image or a captured image of the external device content.

A fifth PIP item 1050 may be an item including content information about an executed application when a user has executed an application installed in the display device 100.

The fifth PIP item 1050 may include at least one of a name of the application, an app icon identifying the application, or a captured image representing a last execution screen of the application.

A sixth PIP item 1060 may be an item including content information about audio when a user has listened to the audio through a sound device connected through an HDMI port.

The sixth PIP item 1060 may include at least one of a name of an application for interworking with the sound device and information about played back audio.

A seventh PIP item 1070 may be another type of item including content information about real-time broadcast content when a user has viewed the real-time broadcast content through a live TV application.

The seventh PIP item 1070 may include at least one of a name of the live TV application, a channel number, a channel name, a name of the broadcast content, and a thumbnail image or a captured image of the broadcast content.

Meanwhile, when login is performed for the first time for a user account, the PIP item may include information about broadcast content based on a live TV application.

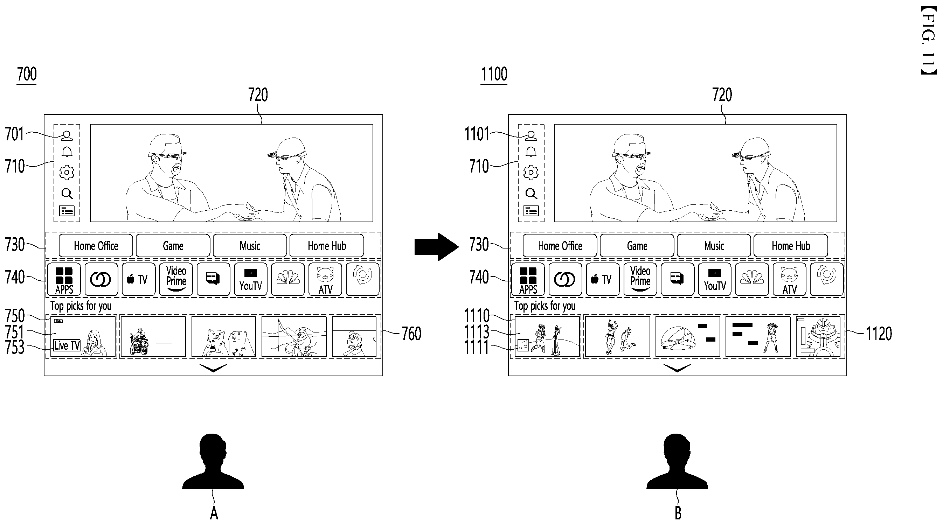

FIG. 11 is a view for explaining that content information displayed on a PIP item changes when a first user account is switched to a second user account according to an embodiment of the present disclosure.

Referring to FIG. 11, the display device 100 may display a first home screen 700 when a first user account corresponding to a first user A is logged in.

The first home screen 700 may include a menu list 710, an advertisement area 720, a service card list 730, an application list 740, a first PIP item 750, and a recommended content list 760.

The description of the first home screen 700 is replaced with the description of FIG. 7.

After the first user account is logged out, a second user account corresponding to a second user B is logged into the display device 100.

When the first user account is switched to the second user account, the display device 100 may switch the first home screen 700 to a second home screen 1100.

The second home screen 1100 may include a menu list 710, an advertisement area 720, a service card list 730, an application list 740, a second PIP item 1110, and a recommended content list 1120.

That is, the display device 100 may switch the first PIP item 750 to the second PIP item 1110 as the first user account is switched to the second user account.

The first PIP item 750 may include content information about content last viewed through the first user account.

The second PIP item 1110 may include content information about content last viewed through the second user account.

The second PIP item 1110 may include at least one of an app icon identifying a music application last executed by the second user account and a captured image of a music video played back through the music application.

As such, according to an embodiment of the present disclosure, information about content or an application most recently played back for each user account is stored, so that information matched with each account can be exposed when account switching occurs.

Accordingly, the user can intuitively grasp in advance input information they last played back, so that convenience can be significantly improved.

According to an embodiment of the present disclosure, the above-described method can be implemented as processor-readable code on a medium in which a program is recorded. Examples of processor-readable media include ROM, RAM, CD-ROM, magnetic tapes, floppy disks, and optical data storage devices.

The display device described as above is not limited to the configurations and methods of the above-described embodiments, but all or part of the embodiments may be selectively combined so that various modifications can be made.

## Claims

1. A display device comprising:
a display;
a memory configured to store content information about content most recently played back by a user account, the content information comprises at least one of information about an application most recently executed by the user account, and a captured image or a thumbnail image of the content provided through the application; and
a controller configured to display a picture in picture (PIP) item including the content information on the display if login is performed through the user account, receive a command for focusing the PIP item, and play back the content on the PIP item or on an entire screen of the display according to the received command.

2. The display device of claim 1, wherein the controller is configured to, when the content is provided through a video on demand (VOD) application, resume playing back the content from a playback point of the captured image according to the received command.

3. The display device of claim 1, wherein the controller is configured to, when the content is broadcast content provided through an application providing a live broadcast, search for an application capable of providing the broadcast content, and play back the broadcast content provided through the searched application.

4. The display device of claim 3, wherein the controller is configured to, if the application capable of providing the broadcast content is not searched, tune to a channel that provided the broadcast content or tune to another channel that plays back the broadcast content.

5. The display device of claim 3, wherein the PIP item is displayed on a home screen, and
the controller is configured to identify, among a plurality of app icons corresponding to a plurality of applications included in the home screen, an app icon corresponding to the application capable of providing the broadcast content.

6. The display device of claim 1, wherein the controller is configured to, when an account is switched from a first user account to a second user account, switch a first PIP item including first content information representing information about content most recently played back by the first user account to a second PIP item including second content information representing information about content most recently played back by the second user account.

7. The display device of claim 1, wherein the content information displayed on the PIP item includes at least one of a name of the most recently executed application, an app icon representing the most recently executed application, the captured image or the thumbnail image, or a name of an external input.

8. A method for operating a display device, the method comprising:
storing content information about content most recently played back by a user account, the content information comprises at least one of information about an application most recently executed by the user account, and a captured image or a thumbnail image of the content provided through the application;
displaying a PIP item including the content information on a display if login is performed through the user account;
receiving a command for focusing the PIP item; and
playing back the content on the PIP item or on an entire screen of the display according to the received command.

9. The method of claim 8, wherein the playing back comprises, when the content is provided through a VOD application, resume playing back the content from a playback point of the captured image according to the received command.

10. The method of claim 8, wherein the playing back comprises, when the content is broadcast content provided through an application providing a live broadcast, searching for an application capable of providing the broadcast content, and
playing back the broadcast content provided through the searched application.

11. The method of claim 10, further comprising, if the application capable of providing the broadcast content is not searched, tuning to a channel that provided the broadcast content or tuning to another channel that plays back the broadcast content.

12. The method of claim 10, wherein the PIP item is displayed on a home screen, and
the method further comprises identifying, among a plurality of app icons corresponding to a plurality of applications included in the home screen, an app icon corresponding to the application capable of providing the broadcast content.

13. The method of claim 8, wherein when an account is switched from a first user account to a second user account, a first PIP item including first content information representing information about content most recently played back by the first user account is switched to a second PIP item including second content information representing information about content most recently played back by the second user account.

14. The method of claim 8, wherein the content information displayed on the PIP item includes at least one of a name of the most recently executed application, an app icon representing the most recently executed application, the captured image or the thumbnail image, or a name of an external input.
